# FASCICULE DE BREVET EUROPEEN

(11) **EP 2 029 672 B1**
(45) Date de publication et mention de la délivrance du brevet: **30.05.2012**
(21) Numéro de dépôt: 07788952.5
(22) Date de dépôt: 01.06.2007
(51) Int. Cl.: C08L 77/00, C09D 5/18, C09K 21/00, H01B 3/44, H01B 7/295, B60R 16/08, H01R 13/527, C08L 87/00, C08G 81/02

(54) **COMPOSITIONS THERMOPLASTIQUES SOUPLES A HAUTE TENUE THERMO-MECANIQUE ET IGNIFUGEES SANS HALOGENE**
BIEGSAME FEUERFESTE HALOGENFREIE THERMOPLASTISCHE ZUSAMMENSETZUNGEN MIT HOHER BESTÄNDIGKEIT GEGEN THERMOMECHANISCHE BELASTUNG
FLEXIBLE HIGH THERMOMECHANICAL STRESS-RESISTANT AND FIREPROOF HALOGEN-FREE THERMOPLASTIC COMPOSITIONS

(30) Priorité: 02.06.2006 FR 0652014
(43) Date de publication de la demande: 04.03.2009
(73) Titulaire: ARKEMA FRANCE, 92700 Colombes (FR)
(72) Inventeur: FLAT, Jean-Jacques, F-27170 Goupillieres (FR); BLONDEL, Philippe, F-27300 Bernay (FR); MESLET, David, F-27300 Bernay (FR)
(86) Numéro de dépôt international: PCT/FR2007/051365
(87) Numéro de publication internationale: WO 2007/141449

(56) Documents cités:
- EP-A- 0 331 876
- EP-A- 0 629 678
- EP-A- 1 375 594
- FR-A- 2 291 252

## Description

La présente invention concerne des compositions ignifugées thermoplastiques souples à haute tenue thermo-mécanique, à base de polyoléfines fonctionnalisées greffées par des motifs polyamides contenant au moins un agent ignifugeant notamment à base de polyphosphates d'ammonium et une zéolithe, et ne contenant pas de composés halogénés, ni de plastifiant phosphoré ou de phosphore rouge.

Ces compositions sont utiles en câblerie pour isoler et protéger des câbles électriques, des fibres optiques et pour la fabrication de pièces électriques telles que des connecteurs électriques, ainsi qu'en électrotechnique pour mouler des objets tels que des boîtiers.

Les polymères thermoplastiques tels que les polyéthylènes, les polyamides ou leurs mélanges sont de bons isolants électriques et sont faciles à mettre en oeuvre. Ils sont utilisés pour faire des boîtiers et des connecteurs électriques et aussi des revêtements de câbles. Les installations électriques peuvent être à l'origine de courts circuits et s'enflammer, elles peuvent être aussi mises au contact d'une flamme et donc s'enflammer et propager l'incendie le long des chemins de câbles. Il existe différents additifs pour rendre ces matières ininflammables, certains à base de produits halogénés, d'autres sans halogènes. L'usage des additifs halogénés est de plus en plus banni pour des questions d'écotoxicologie et de toxicologie (toxicité et corrosivité des vapeurs émises lors des incendies).

Selon les tests de propagation de flamme UL 94 selon la norme ISO 1210, le classement V0 est le meilleur classement qui correspond à un matériau difficilement inflammable, ne produisant pas de gouttes enflammées lors du test.

Pour le classement V1, le matériau est plus facilement inflammable mais ne produit pas de gouttes enflammés lors du test. Quant au classement V2, en plus de l'inflammabilité plus facile que pour V0, des gouttes enflammées peuvent se produire lors du test.

Pour des matériaux encore plus inflammables, on donne la valeur NC (non classé).

Le brevet EP 629 678 décrit des alliages thermoplastiques comprenant des mélanges de polyamide et de polypropylène dans lesquels on ajoute une zéolithe et du polyphosphate d'ammonium (agent déshydratant) pour les rendre ignifuges. Les mélanges de polyamide et de polyoléfine sont constitués (en poids) de 57 % de polyamide 6 (PA 6), de 33 % d'un homopolymère du propylène et 10 % d'un polypropylène greffé par l'anhydride maléique puis condensé avec un oligomère mono aminé de polyamide. On a ajouté 30 parties (en poids) de polyphosphate d'ammonium (APP) et 1 partie de zéolithe dans 69 parties des mélanges précédents puis on a injecté des éprouvettes d'épaisseur 3,2 mm. On a pratiqué sur ces éprouvettes les tests de propagation de flamme UL 94 selon la norme ISO 1210, le classement V0 a été obtenu. V0 est le meilleur classement selon ce test. Ces mélanges, qui sont constitués d'une matrice PA, ne contiennent pas de plastifiant phosphoré et aucune propriété mécanique comme en particulier l'allongement à la rupture n'est indiquée.

Le brevet EP 704 489 décrit des compositions constituées d'une matrice en polyamide dans laquelle sont dispersés des nodules de polyoléfine réticulée et des ignifugeants choisis parmi l'hydroxyde de magnésium, le décabromodiphénylether, le cyanurate de mélamine et le pentaérithritol. Ces compositions sont utiles pour gainer des câbles électriques. Elles ne contiennent pas de polyphosphates, de plastifiant phosphoré ni de zéolithe.

Toutefois les performances de tenue au feu de ces compositions de l'art antérieur sont généralement obtenues au détriment de la ductilité des matériaux (perte considérable d'allongement à la rupture, caractère fragile en choc à température ambiante). Par ailleurs, il est constaté que la stabilité thermique de ces matériaux était insuffisante. Par stabilité thermique, on entend la conservation des propriétés mécaniques (et plus particulièrement l'allongement à la rupture) après divers vieillissements thermiques (par exemple 1 semaine à 120°C dans l'air chaud).

Le document EP 1 375 594 de la demanderesse décrit des compositions ignifugées sans composés halogénés, comprenant, en poids, le total étant 100 parties :
- 50 à 75 parties d'un mélange de polyamide (A) et de polyoléfine (B), comprenant (i) un polyéthylène haute densité (HDPE) et (ii) un mélange d'un polyéthylène (C1) et d'un polymère (C2) choisi parmi les élastomères, les polyéthylènes de très basse densité et les copolymères de l'éthylène, le mélange (C1) + (C2) étant co-greffé par un acide carboxylique insaturé,
- 25 à 50 parties d'un mélange comprenant :
- 0,1 à 48, 8 parties d'un agent ignifugeant, du type polyphosphate d'ammonium,
- 0,1 à 30 parties d'un plastifiant phosphoré,
- 0,1 à 10 parties d'une zéolithe.

Ces compositions présentent un classement V0 ou V1 selon le test UL 94, quand on fait le test au feu sur des éprouvettes d'épaisseur 1,6 mm, et leur allongement à la rupture mesuré selon ISO R 527-1B excède 100%.

Dans le mélange (A) +(B), on a de 60 à 70% en poids de polyamide (A) qui en constitue la matrice.

Ces formulations contiennent un plastifiant phosphoré, l'élément atomique Phosphore étant connu pour contribuer à l'ignifugation des matériaux. Par contre, on peut constater que ces plastifiants, en tant que petites molécules, tendent à quitter le matériau obtenu (à exsuder), ce qui n'est pas acceptable pour les applications envisagées. On a donc maintenant trouvé de nouvelles formulations non plastifiées (donc non exsudantes) qui possèdent néanmoins le même niveau d'ignifugation.

Par ailleurs, l'ignifugation sans halogène des polyoléfines fonctionnalisées est bien connue en particulier pour les applications en câblerie. Elle consiste à introduire des quantités très importantes (60 à 65 % en poids) de charges hydratées telles que du trihydrate d'aluminium (ATH) ou du dihydroxyde de Magnésium (MDH) pour assurer les niveaux attendus d'ignifugation. La transposition de telles recettes d'ignifugation à des matériaux du type copolymère éthylène - (méth)acrylate d'alkyle - anhydride maléique greffé-PA, du type de ceux décrits dans le document WO 02/28959 de la demanderesse qui concerne un mélange d'un copolymère greffé à blocs polyamide constitué d'un tronc en polyoléfine et d'en moyenne au moins un greffon en polyamide, et d'une polyoléfine souple, conduit à une perte catastrophique des propriétés mécaniques de la composition, en particulier en terme d'allongement à la rupture (valeur <100%).

En outre, un tel copolymère greffé PA ne présente aucune résistance à la propagation de la flamme (test UL94: NC= non classé pour Lotader® 3410 -g-PA₆).

Or, certaines applications visées pour ces matériaux (câblerie, pièces électriques et électrotechniques, automobile) exigent une combinaison de telles propriétés.

Le but de l'invention est de trouver des compositions à base de polyoléfines fonctionnalisées greffées par des polyamides, ignifugées sans halogène, qui permettent de réaliser un matériau performant en termes de résistance à la propagation de la flamme (selon le test UL94) mais possédant également des propriétés mécaniques et thermomécaniques de bon niveau ainsi qu'une bonne stabilité thermique et une rhéologie satisfaisante (pas de viscosification excessive, MFI (Melt flow Index) élevé), sans produire d'exsudation sur les matériaux obtenus.

Par propriétés mécaniques et thermomécaniques de bon niveau, on entend un matériau possédant un module de flexion inférieur ou égal à 400 MPa à température ambiante et une valeur de module élastique, mesuré par analyse mécanique dynamique (DMA), d'au moins 0,5 MPa à 150°C. L'analyse DMA consiste à solliciter en traction dynamique (1Hz) le matériau à analyser sur un intervalle de températures de -100°C jusqu'à 250°C à une vitesse de 3°C/min, et à enregistrer les valeurs des modules élastiques et de perte ainsi que leur rapport correspondant à la tangente de l'angle de perte.

De même, on considère que le matériau présente une bonne stabilité thermique lorsqu'il conserve de l'ordre de 70% de ses propriétés mécaniques initiales d'allongement à la rupture et de contrainte à la rupture après vieillissement dans des conditions de thermo-oxydation.

La rhéologie du matériau considéré est par ailleurs jugée satisfaisante lorsqu'elle est compatible avec les procédés de transformation usuels des matériaux à partir des compostions selon l'invention (extrusion, injection...).

Ceci est obtenu selon l'invention, par des compositions ignifugée thermoplastique souple ne contenant pas de composé halogéné, comprenant un copolymère greffé à blocs polyamides constitué d'un tronc en polyoléfine et d'en moyenne au moins un greffon en polyamide dans lequel les greffons sont attachés au tronc par les restes d'un monomère insaturé (X) ayant une fonction capable de réagir avec un polyamide à extrémité amine, les restes du monomère insaturé (X) sont fixés sur le tronc par greffage ou copolymérisation depuis sa double liaison, caractérisées en ce qu'elle comprend en mélange :
- 50 à 70 % en poids du copolymère greffé à blocs polyamides,
- 25 à 35 % en poids d'un agent ignifugeant choisi parmi les phosphates, les phosphinates, les pyrophosphates et les polyphosphates d'ammonium,
- environ 2 % en poids de tamis moléculaire, tel qu'une zéolithe..

De préférence, selon l'invention, le tronc en polyoléfine contenant X est choisi parmi les copolymères éthylène-anhydride maléique et éthylène - (méth)acrylate d'alkyle - anhydride maléique.

De préférence, il y a en moyenne au moins 1,3 moles de X attachées sur le tronc en polyoléfine.

En particulier, le greffon en polyamide a une masse molaire Mn comprise entre 1000 et 5000 g/mole et de préférence entre 2000 et 3000.

Plus particulièrement, l'agent ignifugeant est le polyphosphate d'ammonium.

Selon un mode de réalisation préféré, la composition comprend en outre au moins un copolymère de l'éthylène et d'un comonomère de l'éthylène et d'un comonomère d'ester éthyléniquement insaturé ou d'acide carboxylique.

De préférence, la composition selon l'invention ne comprend ni plastifiant phosphoré ni phosphore rouge.

Les compositions ignifugées thermoplastiques selon l'invention, peuvent contenir en mélange en outre du cyanurate de mélamine et /ou du pentaérythrytol.

Par ailleurs, on ne sortirait pas du cadre de la présente invention si on remplaçait tout ou partie du tronc en polyoléfine et/ou des greffons en polyamide par leur mélange respectif avec des nanocharges (telles que en particulier des nanoargiles ou des nanotubes de carbone), lesdits mélanges étant connus par l'Homme de l'Art sous le terme de nanocomposites.

Les compositions ignifugées selon l'invention, trouvent une utilisation avantageuse pour la fabrication de câbles, ainsi que de pièces électriques telles que des connecteurs électriques, ou en électrotechnique pour mouler des objets tels que des boîtiers.

Cependant, ces compositions peuvent aussi être utilisées pour réaliser des couches de revêtement ou manchons de protection thermique pour des lignes (ou tuyaux) de transfert de fluides dans l'industrie automobile (en particulier carburant ou liquide de refroidissement).

**S'agissant du copolymère greffé à blocs polyamides** il peut être obtenu par réaction d'un polyamide à extrémité amine avec les restes d'un monomère insaturé X fixé par greffage ou copolymerisation sur un tronc en polyoléfine.

Ce monomère X peut être par exemple un époxyde insaturé ou un anhydride d'acide carboxylique insaturé. L'anhydride d'acide carboxylique insaturé peut être choisi par exemple parmi les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique. On utilise avantageusement l'anhydride maléique. On ne sortirait pas du cadre de l'invention en remplaçant tout ou partie de l'anhydride par un acide carboxylique insaturé tel que par exemple l'acide (meth)acrylique.

S'agissant du tronc en polyoléfine, on définit une polyoléfine comme un homo polymère ou copolymère d'alpha oléfines ou de dioléfines, telles que par exemple, éthylène, propylène, butène-1, octène-1, butadiène. A titre d'exemple, on peut citer :
- les homo polymères et copolymères du polyéthylène, en particulier LDPE, HDPE, LLDPE(linear low density polyéthylène, ou polyéthylène basse densité lineaire), VLDPE(very low density polyéthylène, ou polyéthylène très basse densité) et le polyéthylène métallocène .
- les homopolymères ou copolymères du propylène.
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés tel que l'acétate de vinyle, la proportion de comonomère pouvant atteindre 40% en poids.

Avantageusement les troncs en polyoléfine sur lesquels sont attachés les restes de X sont des polyéthylènes greffés par X ou des copolymères de l'éthylène et de X qu'on obtient par exemple par polymérisation radicalaire.

S'agissant des polyéthylènes sur lesquels on vient greffer X on entend par polyéthylène des homo- ou copolymères.

A titre de comonomères, on peut citer :
- les alpha-oléfines, avantageusement celles ayant de 3 à 30 atomes de carbone.
   Des exemples ont été cités plus haut. Ces alpha-oléfines peuvent être utilisées seules ou en mélange de deux ou de plus de deux,
- les esters d'acides carboxyliques insaturés tels que par exemple les (méth)acrylates d'alkyle, les alkyles pouvant avoir jusqu'à 24 atomes de carbone, des exemples d'acrylate ou méthacrylate d'alkyle sont notamment le méthacrylate de méthyle, l'acrylate d'éthyle, l'acrylate de n-butyle, l'acrylate d'isobutyle, l'acrylate de 2-éthylhexyle,
- les esters vinyliques d'acides carboxyliques saturés tels que par exemple l'acétate ou le propionate de vinyle.
- les diènes tels que par exemple le 1,4-hexadiène.
- le polyethylene peut comprendre plusieurs des comonomères précédents.

Avantageusement le polyéthylène qui peut être un mélange de plusieurs polymères, comprend au moins 50% et de préférence 75% (en moles) d'éthylène, sa densité peut être comprise entre 0,86 et 0,98 g/cm³. Le MFI (indice de viscosité à 190°C, 2,16 kg) est compris avantageusement entre 20 et 1000 g/10 min.

A titre d'exemple de polyéthylènes on peut citer :
- le polyéthylène basse densité (LDPE)
- le polyéthylène haute densité (HDPE)
- le polyéthylène linéaire basse densité (LLDPE)
- le polyéthylène très basse densité (VLDPE)
- le polyéthylène obtenu par catalyse métallocène,
- les élastomères EPR (éthylène - propylène - rubber)
- les élastomères EPDM (éthylène - propylène - diène)
- les mélanges de polyéthylène avec un EPR ou un EPDM
- les copolymères éthylène-(méth)acrylate d'alkyle pouvant contenir jusqu'à 60% en poids de (méth)acrylate et de préférence 2 à 40%.

Le greffage est une opération connue en soi.

S'agissant des copolymères de l'éthylène et de X c'est-à-dire ceux dans lesquels X n'est pas greffé il s'agit des copolymères de l'éthylène, de X et éventuellement d'un autre monomère pouvant être choisi parmi les comonomères qu'on a cité plus haut pour les copolymères de l'éthylène destinés à être greffés.

On utilise avantageusement les copolymères éthylène-anhydride maléique et éthylène - (méth)acrylate d'alkyle - anhydride maléique. Ces copolymères comprennent de 0,2 à 10 % en poids d'anhydride maléique, de 0 à 40 % et de préférence 5 à 40 % en poids de (méth)acrylate d'alkyle. Leur MFI est compris entre 5 et 100 (190°C - 2,16 kg). Les (méth)acrylates d'alkyle ont déjà été décrits plus haut. La température de fusion est comprise entre 80 et 120°C.

Avantageusement il y a en moyenne au moins deux moles de X par chaîne attachées sur le tronc en polyoléfine et de préférence de 2 à 5. L'homme de métier peut determiner facilement par analyze IRTF le nombre de ces moles X. Par exemple si X est l'anhydride maleique et la M_{w} = 95 000 g/mol du polyoléfine on a trouvé que ceci correspondait à une proportion d'anhydride d'au moins 1,5 % en poids de l'ensemble du tronc de polyoléfine contenant X et de préférence de 2,5 à 4%. Ces valeurs associées à la masse des polyamides à terminaison amine determinent la proportion de polyamide et de tronc dans le copolymère greffé à blocs polyamides.

**S'agissant du polyamide à extrémité amine** on entend par polyamide les produits de condensation :
- d'un ou plusieurs aminoacides, tels les acides aminocaproïques, amino-7-heptanoïque, amino-11-undécanoïque et amino-12-dodécanoïque d'un ou plusieurs lactames tels que le caprolactame, oenantholactame et lauryllactame ;
- d'un ou plusieurs sels ou mélanges de diamines telles l'hexaméthylène-diamine, la dodécaméthylènediamine, la métaxylylènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique :
- ou des mélanges de plusieurs monomères ce qui conduit à des copolyamides.

On peut utiliser des mélanges de polyamides. On utilise avantageusement le PA 6, le PA 11, le PA 12, le copolyamide à motifs 6 et motifs 11 (PA 6/11), le copolyamide à motifs 6 et motifs 12 (PA 6/12), et le copolyamide à base de caprolactame, hexaméthylènediamine et acide adipique (PA 6/6-6).

Le degré de polymérisation peut varier dans de larges proportions, selon sa valeur c'est un polyamide ou un oligomère de polyamide. Dans la suite du texte on utilisera indifferemment les deux expressions pour les greffons.

Pour que le polyamide ait une terminaison monoamine il suffit d'utiliser un limiteur de chaîne de formule 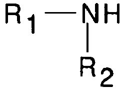 dans laquelle :
R₁ est l'hydrogène ou un groupement alkyle linéaire ou ramifié contenant jusqu'à 20 atomes de carbone,
R₂ est un groupement ayant jusqu'à 20 atomes de carbone alkyle ou alcenyle linéraire ou ramifié, un radical cycloaliphatique saturé ou non, un radical aromatique ou une combinaison des précédents. Le limiteur peut être par exemple la laurylamine ou l'oleylamine.

Avantageusement le polyamide à extrémité amine a une masse molaire comprise entre 1000 et 5000 g/mole et de préférence entre 2000 et 3000.

Les monomères amino-acides ou lactames préférés pour la synthèse de l'oligomère monoaminé selon l'invention sont choisis parmi le caprolactame, l'acide amino-11-undécanoïque ou le dodécalactame. Les limitateurs monofonctionnels de polymérisation préférés sont la laurylamine et l'oléylamine.

La polycondensation définie ci-dessus s'effectue selon les procédés habituellement connus, par exemple à une température comprise en général entre 200 et 300 °C, sous vide ou sous atmosphère inerte, avec agitation du mélange réactionnel. La longueur de chaîne moyenne de l'oligomère est déterminée par le rapport molaire initial entre le monomère polycondensable ou le lactame et le limitateur monofonctionnel de polymérisation. Pour le calcul de la longueur de chaîne moyenne, on compte habituellement une molécule de limitateur de chaîne pour une chaîne d'oligomère.

L'addition de l'oligomère monoaminé de polyamide sur le tronc de polyoléfine contenant X s'effectue par réaction d'une fonction amine de l'oligomère avec X. Avantageusement X porte une fonction anhydride ou acide, on crée ainsi des liaisons amides ou imides.

On réalise l'addition de l'oligomère à extrémité amine sur le tronc de polyoléfine contenant X de préférence à l'état fondu. On peut ainsi, dans une extrudeuse, malaxer l'oligomère et le tronc à une température généralement comprise entre 230 et 300 °C. Le temps de séjour moyen de la matière fondue dans l'extrudeuse peut être compris entre 5 secondes et 5 minutes, et de préférence entre 20 secondes et 1 minute. Le rendement de cette addition est évalué par extraction sélective des oligomères de polyamide libres c'est-à-dire ceux qui n'ont pas réagi pour former le copolymère greffé à blocs polyamides final.

La préparation de tels polyamides à extrémité amine ainsi que leur addition sur un tronc de polyoléfine contenant X est décrite dans les brevets US 3976720, US 3963799, US 5342886 et FR 2291225.

Les copolymères greffés à blocs polyamides de la présente invention sont caracterisés par une organisation nano structurée avec des lamelles de polyamide d'épaisseur comprise entre 10 et 50 nanomètres.

Avantageusement la proportion de copolymère greffé à blocs polyamides est de 15 à 50% pour respectivement 85 à 50% de polyoléfine souple.

Les mélanges de l'invention ont une très bonne résistance au fluage à des températures au moins égales à 80°C et pouvant aller jusqu'à 130°C, c'est à dire qu'ils ne présentent pas de rupture sous 25 kPa.

Les mélanges de l'invention peuvent être préparés par mélange à l'état fondu dans des extrudeuses (mono ou bi vis), des malaxeurs BUSS, des mélangeurs BRABENDER et en général les dispositifs habituels de mélange des polymères thermoplastiques et de préférence les extrudeuses bivis corotatives. Les mélanges de l'invention peuvent comprendre aussi des agents fluidifiants tels que de la silice, de l'éthylène-bis -amide, du stéarate de calcium ou du stéarate de magnesium. Ils peuvent aussi comprendre des antioxydants, des anti U.V., des charges minérales et des pigments de coloration.

Les mélanges de l'invention peuvent être préparés en une étape dans une extrudeuse. Dans les premières zones on introduit le tronc contenant X (par exemple un copolymère éthylène-(meth)acrylate d'alkyle-anhydride maléique), le polyamide à extrémité amine puis quelques zones plus loin l'agent ignifugeant par gavage latéral. On peut aussi introduire tous les ingrédients dans la première zone de l'extrudeuse.

**S'agissant de l'agent ignifugeant**, ce sont des composés susceptibles de former au moment de la combustion des acides tels que H₃PO₄ (acide orthophosphorique), (H PO₃)ₙ (acide métaphosphorique) et H ₄P₂O₇ (acide pyrophosphorique). A titre d'illustration de tels agents, on peut citer les phosphates, les phosphinates, les pyrophosphates et les polyphosphates d'ammonium, les phosphates de mélamine, le phosphite de mélamine, le phosphite et le diphosphite de pipérazine, le phosphate de guanazole, le pyrophosphate de mélamine et le pyrophosphate de pipérazine.

On utilise avantageusement les polyphosphates d'ammonium, qui sont des polymères en chaîne simple de formule générale (NH₄)ₙ₊₂ PₙO₃ₙ₊₁, dans laquelle n représente un nombre entier supérieur ou égal à 2.

Le polyphosphate d'ammonium peut être encapsulé dans une résine à base de mélamine. On ne sortirait pas du cadre de l'invention en utilisant un mélange des agents ignifugeants précités. L'agent ignifugeant peut être fonctionnalisé, par exemple il peut porter des fonctions silanes.

S'agissant des zéolithes, elles sont décrites dans ULLMANN'S Encyclopedia of Industrial Chemistry, 1996, 5th édition, Vol 28 pages 475-504. On peut utiliser les zéolithes de type A, X, Y, L, ZSM, ZM ou aussi les zéolithes naturelles telles que la chabazite, la mordénite et la faujasite. On utilise avantageusement les zéolithes de type 3A, 4A, 5A, 10X et 13X. On ne sortirait pas du cadre de l'invention en utilisant un mélange de ces différentes zéolithes.

Les zéolithes sont généralement utilisées sous forme de poudre de plus de 1 µm et de préférence entre 2 et 50 µm.

On ne sortirait pas du cadre de l'invention en substituant ces zéolithes par des additifs minéraux connus sous la dénomination "capteur d'acide" ou d'hydrotalcites. A titre d'exemple, on peut citer le DHT 4A de la société KYOWA Chemical.

De manière particulièrement avantageuse, la composition selon l'invention peut également comprendre au moins un copolymère de l'éthylène et d'un comonomère d'ester éthyléniquement insaturé ou d'acide carboxylique.

Avantageusement, ce comonomère d'ester éthyléniquement insaturé ou d'acide carboxylique est présent dans une proportion de 5 à 40 % en moles, préférablement de 15 à 35 % en mole basé sur le nombre total de moles du copolymère.

Ce comonomère peut comprendre au moins un élément choisi parmi l'acétate de vinyle (VA), l'acrylate d'éthyle (EA), l'acrylate de méthyle (MA), l'acrylate de n-butyle (BA), l'acrylate d'isobutyle, le méthacrylate de méthyle, l'acrylate de 2-éthylhexyle (AE2H ou EH), l'acide acrylique et l'acide méthacrylique.

De préférence, ce copolymère d'éthylène et d'un comonomère d'ester éthyléniquement insaturé ou d'acide carboxylique est introduit dans des proportions pouvant aller jusqu'à 20 parties pour 100 parties de composition selon l'invention.

En plus des produits précédents, on peut ajouter tout additif sans halogène bien connu de l'Homme de l'Art dans le domaine des polyamides comme des cyanurates de mélamine, du pentaérythritol et des agents anti-goutte de nature siliconée ou fluorée. De tels additifs sont introduits dans des proportions pouvant aller jusqu'à 20% en poids de la composition totale.

Les compositions selon l'invention peuvent renfermer en outre au moins un additif choisi parmi les colorants, les pigments, les azurants, les anti- oxydants, les stabilisants UV et les stabilisants thermiques.

Les compositions de l'invention sont préparées soit par mélange de tous les ingrédients (copolymère, ignifugeant, zéolithe) dans un procédé dit « en direct », soit en ajoutant l'agent ignifugeant, et la zéolithe au mélange de copolymère et de PA déjà préparé (procédé dit «en reprise»).

### Compoundage des formulations :

Les formulations décrites ci-dessous sont préparées par compoundage grâce à une extrudeuse double vis co-rotative de type ZSK 40 de COPERION Werner et Pfleiderer® (Procédé dit « double-vis » indiqué dans le tableau ci-après « D.vis ») dont les éléments de fourreaux sont chauffés selon un profil plat à 240°C ; la vitesse de rotation est de 300 rpm avec un débit de 70 kg/h; les additifs sont ajoutés par gavage latéral dans le polymère fondu au fourreau 4.

Un autre procédé de compoundage met en oeuvre un ko-malaxeur BUSS de type PR46 (procédé dit «ko-malaxeur» indiqué dans le tableau « ko-mal. »). Pour ce procédé dit «ko-malaxeur», le profil de température métal est 220/250/250/250/240; la vitesse de rotation du ko-malaxeur de 280 rpm et le débit fixé à 15 kg/h, la moitié de la charge ignifuge étant introduite avec les polymères dans le premier puits puis la seconde moitié dans le second puits, un dégazage étant appliqué au troisième puits.

### Matériaux employés :

**Lotader® 3410 :** terpolymère d'éthylène, d'acrylate de butyle(18% poids) et d'anydride maléique(3% poids) produit par ARKEMA possédant un MFI (190°C, 2.16 kg mesuré selon ISO 1133) de 5 g/10mn.
**Lotader® 6200:** terpolymère d'éthylène, d'acrylate d'éthyle(6,5% poids) et d'anydride maléique(2,8% poids) produit par ARKEMA possédant un MFI (190°C, 2.16 kg mesuré selon ISO 1133) de 40 g/10mn.
**Lotader® 8200 :** terpolymère d'éthylène, d'acrylate d'éthyle(6,5% poids) et d'anydride maléique(2,8% poids) produit par ARKEMA possédant un MFI (190°C, 2.16 kg mesuré selon ISO 1133) de 200 g/10mn.
**Lotader® 7500 :** terpolymère d'éthylène, d'acrylate d'éthyle(17,5% poids) et d'anydride maléique(2,8% poids) produit par ARKEMA possédant un MFI (190°C, 2.16 kg mesuré selon ISO 1133) de 70 g/10mn.
**Lotader® 3210 :** terpolymère d'éthylène, d'acrylate de butyle(6% poids) et d'anydride maléique(3% poids) produit par ARKEMA possédant un MFI (190°C, 2.16 kg mesuré selon ISO 1133) de 5 g/10mn.
**Evatane® 2403 :** Copolymère d'éthylène et d'acétate de vinyle(24% poids) produit par ARKEMA possédant un MFI (190°C, 2.16 kg mesuré selon ISO 1133) de 3 g/10mn.
**Lotryl ®35BA40:** Copolymère d'éthylène et d'acrylate de butyle (35% poids) possédant un MFI (190°C, 2.16 kg mesuré selon ISO 1133) de 40 g/10mn.
**Lotryl® 30BA02 :** Copolymère d'éthylène et d'acrylate de butyle (30% poids) possédant un MFI (190°C, 2.16 kg mesuré selon ISO 1133) de 2 g/10mn.
**PA6 :** Polyamide 6 terminé par une fonction amine de Mn égale à 2500 g/mol mesurée par GPC.
**Irganox 1098 :** stabilisant thermique de type « phénol encombré » produit par la société CIBA.
**Irganox 1010 :** stabilisant thermique de type « phénol encombré » produit par la société CIBA.
**Irgafos 168 :** stabilisant thermique de type « phosphite» produit par la société CIBA.
**Siliporite® NK10AP:** tamis moléculaire de type zéolithe 4A produit par la société CECA.
**Exolit® AP750 :** polyphosphate d'ammonium produit par la société CLARIANT et possédant un taux de phosphore de 21% et un taux d'azote de 12%.
**Budit® 3167:** polyphosphate d'ammonium produit par la société BUDENHEIM et possédant 50% de P₂O₅ et 21% d'azote.
**Phosphlex® 31L:**phosphate d'isopropyl phényle et de diphényle produit par la société AKZO.
**PER :** Monopentaérythritol produit par la société CELANESE.
**Magnifin H5 :** Di-hydroxyde de Magnésium produit par la société MARTINSWERK.
**Magnifin H5KV :** Di-hydroxyde de Magnésium produit par la société MARTINSWERK.
**Stavinor CA PSE :** stéarate de calcium produit par la société CECA.

### Caractérisation des matériaux

**Réalisation de bandes par extrusion :** les granulés issus des procédés de synthèse « double vis » et « ko-malaxeur » sont mis en forme grâce à une extrudeuse double vis de laboratoire de type ThermoHaake Rheocord System 40 équipée d'une filière plate ; l'extrudeuse étant chauffée à 210°C pour donner des bandes à partir desquelles seront découpées les éprouvettes nécessaires afin de caractériser les matériaux.
**Mesure du MFI :** elle est réalisée selon la norme ISO 1133 dans les conditions suivantes (230°C, 2.16 kg) sauf si mention différente.
**Mesure de la résistance au fluage :** des éprouvettes découpées dans les bandes ci-dessus sont soumises à une masse correspondant à une pression de 2 bars dans une étuve régulée en température. Le test est considéré comme positif si l'éprouvette résiste 15 minutes sous cette charge et on note la température maximale supportée. Si l'éprouvette ne résiste pas à ces conditions, on mesure le temps au bout duquel l'éprouvette s'est rompue.
**Allongement et contrainte à la rupture :** mesurés selon la norme ISO 527 : 93-1BA à partir d'éprouvettes découpées dans les bandes ci-dessus.
**Dureté :** mesurée en échelle Shore D selon la norme ISO 868.
**Indice Limite d'oxygène (ILO):** mesuré selon la norme ISO 4589.
**Résistance à la propagation de la flamme :** mesurée par le test dit « UL94 » selon la norme ISO 1210.
**Exsudation :** observation notée oui ou non (O/N).

Les résultats des compositions selon l'invention (exemples 1 à 5) et des compositions de l'art antérieur (exemples comparatifs CE1-CE9) sont rassemblés dans le tableau 1 ci-après :

**Tableau 1**

| EXEMPLES | 1 | 2 | 3 | 4 | 5 | EC1 | EC2 | EC3 | EC4 | EC5 | EC6 | EC7 | EC8 | EC9 |
|---|---|---|---|---|---|---|---|---|---|---|---|---|---|---|
| | | | | | | | | | | | | | | |
| Procédé | D. vis | D. vis | D. vis | D. vis | D. vis | ko-mal. | ko-mal. | ko-mal. | ko-mal. | ko-mal. | ko-mal. | ko-mal. | ko-mal. | D. vis |
| | | | | | | | | | | | | | | |
| EVATANE 2403 | | | | 13,4 | | | | | | | | | | |
| Lotryl 35BA40 | | | | | | 17,5 | | | | 18 | 18 | | | |
| Lotryl 30BA02 | | | | | | | 18 | 18 | 18 | | | 16 | 14 | |
| | | | | | | | | | | | | | | |
| Lotader 8200 | | | | | | | | 21.6 | | | | | | |
| Lotader 7500 | | | | | | | 21.6 | | | 21.6 | | 19.2 | 16.8 | |
| Lotader 6200 | | | | | | 20,8 | | | 21.6 | | 21.6 | | | |
| Lotader 3410 | 53,6 | 49,6 | 56 | 42,9 | 53,6 | | | | | | | | | 48,2 |
| PA6 | 13,4 | 12,4 | 14 | 10,7 | 13,4 | 5,2 | 5.4 | 5.4 | 5.4 | 5.4 | 5.4 | 4.8 | 4.2 | 12 |
| Exolit AP750 | 30 | 35 | 25 | 30 | | | | | | | | | | |
| Budit 3167 | | | | | 30 | | | | | | | | | 27 |
| Magnifin H5KV | | | | | | 55 | | | | | | | | |
| Magnifin H5 | | | | | | | 55 | 55 | 55 | 55 | 55 | 60 | 65 | |
| | | | | | | | | | | | | | | |
| Phosphlex 31L | | | | | | | | | | | | | | 10 |
| | | | | | | | | | | | | | | |
| Siliporite NK10AP | 2 | 2 | 2 | 2 | 2 | | | | | | | | | 1,8 |
| PER | | | 2 | | | | | | | | | | | |
| Irganox 1098 | 0,5 | 0,5 | 0,5 | 0,5 | 0,5 | | | | | | | | | 0,5 |
| Irgafos 168 | 0,5 | 0,5 | 0,5 | 0,5 | 0,5 | | | | | | | | | 0,5 |
| Irganox 1010 | | | | | | 0,75 | | | | | | | | |
| Stavinor CA PSE | | | | | | 0,75 | | | | | | | | |
| | | | | | | | | | | | | | | |
| MFI (220°C, 21,6 kg) | | | | | | 0,9 | | | | | | | | |
| MFI (230°C; 2,16kg) | 7,3 | 7,3 | 6,1 | 6,8 | | | | | | | | | | |
| ILO (%) | 37,2 | 41,8 | | 39,1 | 38,4 | | 28,6 | 28,1 | 28,1 | 28,7 | 28,1 | 31,3 | 34,0 | 38.7 |
| Classement UL94 | V1 | V0 | V0 | V0 | V0 | | | | | | | | | V0 |
| Fluage (température) | | 110°C | | 110°C | 140 °C | | <100°C | <100°C | <100°C | <100°C | <100°C | <100°C | <100°C | 120 °C |
| Allongement rupture (%) | 261 | 146 | | 448 | 321 | | 64 | 50 | 45 | 19 | 16 | 45 | 18 | 412 |
| Contrainte rupture (MPa) | 8,5 | 7,2 | | 10,7 | 9,8 | | 7.9 | 9.3 | 9.3 | 7.4 | 8.3 | 8.9 | 10 | 7.4 |
| Dureté (Shore D) | | 42 | | 40 | 42 | | | | | | | | | 32 |
| Exsudation (O/N) | N | N | N | N | N | N | N | N | N | N | N | N | N | O |

## Revendications

1. Composition ignifugée thermoplastique souple ne contenant pas de composé halogéné, comprenant un copolymère greffé à blocs polyamides constitué d'un tronc en polyoléfine et d'en moyenne au moins un greffon en polyamide dans lequel les greffons sont attachés au tronc par les restes d'un monomère insaturé (X) ayant une fonction capable de réagir avec un polyamide à extrémité amine, les restes du monomère insaturé (X) sont fixés sur le tronc par greffage ou copolymérisation depuis sa double liaison, **caractérisées en ce qu'**elle comprend en mélange :
- 50 à 70 % en poids du copolymère greffé à blocs polyamides,
- 25 à 35 % en poids d'un agent ignifugeant choisi parmi les phosphates, les phosphinates, les pyrophosphates et les polyphosphates d'ammonium,
- environ 2 % en poids de tamis moléculaire, tel qu'une zéolithe.

2. Composition selon la revendication 1, **caractérisée en ce que** le tronc en polyoléfine contenant (X) est choisi parmi les copolymères éthylène-anhydride maléique et éthylène-(méth)acrylate d'alkyle-anhydride maléique.

3. Composition selon la revendication 1 ou 2, **caractérisée en ce qu'**il y a au moins 1,3 moles de (X) attachées sur le tronc en polyoléfine.

4. Composition selon l'une quelconque des revendications 1 à 3, **caractérisée en ce que** le greffon en polyamide a une masse molaire comprise entre 1000 et 5000 g/mole et de préférence entre 2000 et 3000.

5. Composition selon l'une quelconque des revendications 1 à 4, **caractérisée en ce que** l'agent ignifugeant est le polyphosphate d'ammonium.

6. Composition selon l'une quelconque des revendications 1 à 5, **caractérisée en ce qu'**elle comprend en outre au moins un copolymère de l'éthylène et d'un comonomère d'ester éthyléniquement insaturé ou d'acide carboxylique.

7. Composition selon l'une quelconque des revendications précédentes, **caractérisée en ce qu'**elle comprend ni plastifiant phosphoré ni phosphore rouge.

8. Composition selon l'une quelconque des revendications précédentes, **caractérisée en ce qu'**elle contient en mélange en outre du cyanurate de mélamine et /ou du pentaérythrytol.

9. Utilisation d'une composition ignifugée thermoplastique selon l'une quelconque des revendications 1 à 8 pour la fabrication de câbles électriques, de pièces électriques telles que des connecteurs ou pour mouler des boîtiers en électrotechnique.

10. Utilisation d'une composition ignifugée thermoplastique selon l'une quelconque des revendications 1 à 8 pour la fabrication de couches de revêtement ou manchons de protection thermique pour des lignes de transfert de fluides en automobile.

## Claims

1. A flame-retarded flexible thermoplastic composition containing no halogen compound, comprising a graft copolymer containing polyamide blocks and composed of a polyolefin backbone and on average at least one polyamide graft, in which the grafts are attached to the backbone by the radicals of an unsaturated monomer (X) having a function capable of reacting with an amine-terminal polyamide, the radicals of the unsaturated monomer (X) being fixed to the backbone by grafting or copolymerization from its double bond, wherein said composition comprises, in a mixture:
- 50% to 70% by weight of the graft copolymer containing polyamide blocks,
- 25% to 35% by weight of a flame retardant selected from ammonium phosphates, phosphinates, pyrophosphates, and polyphosphates,
- approximately 2% by weight of molecular sieve, such as a zeolite.

2. The composition as claimed in claim 1, wherein the polyolefin backbone containing (X) is selected from ethylene-maleic anhydride and ethylene-alkyl (meth)acrylate-maleic anhydride copolymers.

3. The composition as claimed in claim 1 or 2, wherein there are at least 1.3 moles of (X) attached to the polyolefin backbone.

4. The composition as claimed in any one of claims 1 to 3, wherein the polyamide graft has a molar mass of between 1000 and 5000 g/mol and preferably between 2000 and 3000.

5. The composition as claimed in any one of claims 1 to 4, wherein the flame retardant is ammonium polyphosphate.

6. The composition as claimed in any one of claims 1 to 5, further comprising at least one copolymer of ethylene and a carboxylic acid or ethylenically unsaturated ester comonomer.

7. The composition as claimed in any one of the preceding claims, wherein it comprises no phosphorus plasticizer or red phosphorus.

8. The composition as claimed in any one of the preceding claims, wherein the mixture further comprises melamine cyanurate and/or pentaerythritol.

9. The use of a flame-retarded thermoplastic composition as claimed in any one of claims 1 to 8 for the manufacture of electrical cables, electrical components such as connectors, or for molding cases in electrical engineering.

10. The use of a flame-retarded thermoplastic composition as claimed in any one of claims 1 to 8 for manufacturing protective layers or thermal protection sleeves for automotive fluid transfer lines.

## Patentansprüche

1. Flammgeschützte flexible thermoplastische Zusammensetzung, die keine Halogenverbindung enthält, umfassend ein Pfropfcopolymer mit Polyamidblöcken, bestehend aus einer Polyolefin-Hauptkette und durchschnittlich mindestens einem Polyamid-Pfropfanteil, worin die Pfropfanteile über die Reste eines ungesättigten Monomers (X) mit einer Funktion, die mit einem Polyamid mit einer Aminendgruppe reagieren kann, an die Hauptkette gebunden sind, die Reste des ungesättigten Monomers (X) durch Pfropfung oder Copolymerisation über seine Doppelbindung an der Hauptkette fixiert sind, **dadurch gekennzeichnet, dass** sie in Abmischung:
- 50 bis 70 Gew.-% des Pfropfcopolymers mit Polyamidblöcken,
- 25 bis 35 Gew.-% eines Flammschutzmittels, das unter Ammoniumphosphaten, -phosphinaten, -pyrophosphaten und -polyphosphaten ausgewählt ist,
- ungefähr 2 Gew.-% Molsieb, wie einen Zeolith, umfasst.

2. Zusammensetzung nach Anspruch 1, **dadurch gekennzeichnet, dass** die (X) enthaltende Polyolefin-Hauptkette unter Ethylen-Maleinsäureanhydrid-Copolymeren und Ethylen-Alkyl(meth)acrylat-Maleinsäureanhydrid-Copolymeren ausgewählt ist.

3. Zusammensetzung nach Anspruch 1 oder 2, **dadurch gekennzeichnet, dass** mindestens 1,3 mol (X) an die Polyolefin-Hauptkette gebunden sind.

4. Zusammensetzung nach einem der Ansprüche 1 bis 3, **dadurch gekennzeichnet, dass** der Polyamid-Pfropfanteil eine Molmasse zwischen 1000 und 5000 g/mol und vorzugsweise zwischen 2000 und 3000 aufweist.

5. Zusammensetzung nach einem der Ansprüche 1 bis 4, **dadurch gekennzeichnet, dass** es sich bei dem Flammschutzmittel um Ammoniumpolyphosphat handelt.

6. Zusammensetzung nach einem der Ansprüche 1 bis 5, **dadurch gekennzeichnet, dass** sie außerdem mindestens ein Copolymer von Ethylen und einem ethylenisch ungesättigten Ester- oder Carbonsäure-Comonomer umfasst.

7. Zusammensetzung nach einem der vorhergehenden Ansprüche, **dadurch gekennzeichnet, dass** sie weder phosphorhaltigen Weichmacher noch roten Phosphor umfasst.

8. Zusammensetzung nach einem der vorhergehenden Ansprüche, **dadurch gekennzeichnet, dass** sie in Abmischung außerdem Melamincyanurat und/oder Pentaerythrit enthält.

9. Verwendung einer flammgeschützten thermoplastischen Zusammensetzung nach einem der Ansprüche 1 bis 8 zur Herstellung von Elektrokabeln, elektrischen Bauteilen wie Verbindern oder zum Abformen von Gehäusen in der Elektrotechnik.

10. Verwendung einer flammgeschützten thermoplastischen Zusammensetzung nach einem der Ansprüche 1 bis 8 zur Herstellung von Wärmeschutz-Überzugsschichten oder -Muffen für Fluidtransferleitungen im Auto.
